# EUROPÄISCHE PATENTSCHRIFT

(11) **EP 2 633 959 B1**
(45) Veröffentlichungstag und Bekanntmachung des Hinweises auf die Patenterteilung: **12.11.2014**
(21) Anmeldenummer: 13000727.1
(22) Anmeldetag: 13.02.2013
(51) Int. Cl.: B25G 3/26, F16B 25/00, F16B 25/10, F16B 35/04, B25G 3/28

(54) **Vorrichtung zur sicheren Befestigung eines Holzstieles im Hammerauge eines Hammerkopfes sowie Schraube zur Befestigung eines Holzstieles im Hammerauge eines Hammerkopfes**
Device for securing the wooden handle in the eye of a hammer head and screw for attaching a wooden handle in the eye of a hammer head
Dispositif de fixation sécurisée d'un manche en bois dans l'emmanchure d'une tête de marteau ainsi qu'une vis destinée à la fixation d'un manche en bois dans l'emmanchure d'une tête de marteau

(30) Priorität: 16.02.2012 DE 202012001634 U
(43) Veröffentlichungstag der Anmeldung: 04.09.2013
(73) Patentinhaber: Joh. Hermann Picard GmbH & Co. KG, 42349 Wuppertal (DE)
(72) Erfinder: Simon, Franck, 42853 Remscheid (DE)
(74) Vertreter: Ostriga Sonnet Wirths & Vorwerk

(56) Entgegenhaltungen:
- EP-A1- 0 703 045
- WO-A1-96/22472
- DE-A1- 3 041 531
- DE-U1- 9 107 838
- GB-A- 731 969
- US-A- 521 861

## Beschreibung

Die Erfindung betrifft zunächst eine Vorrichtung zur sicheren Befestigung eines Holzstieles im Hammerauge eines Hammerkopfes mittels einer Schraube einschließlich Schraubenkopf und einem Holzschraubgewinde sowie einem Mittel zur Verdrängung des Holzmaterials. Eine solche Vorrichtung ist aus US 521861A bekannt.

Eine derartige Vorrichtung ist beispielsweise auch aus der EP 0 703 045 A1 mit dem Titel "genormter Werkzeugstiel aus Holz mit gehärteter Schutzhülse und zusätzlicher Befestigungssicherung" bekannt. Die Befestigungssicherung besteht bei diesem Stand der Technik einerseits aus einem Ringkeil, der in den Holzstiel eingeschlagen wird und der den Holzstiel auseinanderspreizt sowie im Hammerauge befestigt und andererseits aus einer gehärteten Sicherungsplatte, welche mittels einer zusätzlichen Schraube mit Holzschraubgewinde, welche den Ringkeil durchquert, am Holzstiel angeordnet wird. Die Sicherungsplatte hat einen größeren Querschnitt als das Hammerauge und verhindert somit das unbeabsichtigte Lösen des Hammers vom Holzstiel.

Der wesentliche Nachteil dieses Standes der Technik besteht darin, dass die Sicherungsplatte aus der Kontur des Hammerkopfes hervorsteht und bei Einsatz des Hammers leicht getroffen und abgeschert werden kann. Darüber hinaus wird die Befestigungssicherung nach diesem Stand der Technik aus insgesamt drei Teilen, nämlich dem Ringkeil, der Befestigungsplatte und der Schraube gebildet, welche in mehreren Arbeitsgängen aufwändig im Holzstiel angeordnet werden müssen.

Darüber hinaus ist aus der DE 30 41 531 A1 mit dem Titel "Schlagwerkzeug" eine Vorrichtung zur sicheren Befestigung eines Holzstieles im Hammerauge eines Hammerkopfes bekannt, welche lediglich aus einer kegelförmigen, mit einem Holzschraubgewinde versehenen Schraube sowie einem großen Schraubenkopf versehen ist. Der Schraubenkopf ist größer als das Hammerauge und ist in einer Einsenkung des Hammerkopfes vollständig angeordnet. Gegenüber dem vorgenannten Stand der Technik weist diese Befestigungssicherung den Vorteil auf, dass sie einstückig ist und darüber hinaus auch nicht die Gefahr des Abscherens der Sicherungseinrichtung während des Einsatzes des Hammers besteht.

Besonders nachteilig an diesem Stand der Technik ist jedoch die Tatsache, dass der kegelförmige Holzschraubgewindebereich nur sehr schwierig im Holzstiel zu befestigen ist, da der Einschraubwiderstand einer derartigen, mit einem Holzschraubgewinde versehenen Kegelschraube sehr groß ist.

Ausgehend vom zweitgenannten Stand der Technik besteht die Aufgabe der Erfindung nun darin, die Vorrichtung zur sicheren Befestigung eines Holzstiels im Hammerauge eines Hammerkopfes so zu optimieren, dass sie nicht nur einfach und kostengünstig herzustellen sowie schnell zu befestigen ist, sondern auch eine dauerhafte und zuverlässige Anordnung des Hammerkopfes auf dem Stiel garantieren.

Die Lösung der Aufgabe ergibt sich aus den Merkmalen des Anspruches 1, insbesondere den Merkmalen des Kennzeichenteils, wonach die einstückige Schraube zur Befestigung des Holzsteiles einen als Scheibenkopf ausgebildeten Schraubenkopf aufweist, dass der des Scheibenkopfes größer ist als der Durchmesser des zylindrischen Teils des Hammeranges gemäß DiN1195 Durchmesser und dass der Scheibenkopf als Keilersatz einen sich daran anschließenden, eine Verdrängung von Holzmaterial hervorrufenden Kegelbereich und einen separaten, zylindrischen Holzschraubgewindebereich aufweist.

Der wesentliche Vorteil der erfindungsgemäßen Vorrichtung besteht darin, dass durch die Ausgestaltung der Schraube - nachfolgend Keilschraube genannt - in einen Kegelbereich und einen separaten zylindrischen Holzschraubgewindebereich letztere aufgrund ihres deutlich geringeren Einschraubwiderstandes auf sehr einfache Weise in dem Holzstiel befestigt werden kann.

Darüber hinaus bietet die erfindungsgemäße Vorrichtung zur sicheren Befestigung eines Holzstieles im Hammerauge eines Hammerkopfes die Möglichkeit durch eine Veränderung der Ausgestaltung des Kegels diesen der Größe des Hammerauges bzw. des Stieles auf einfache Weise anzupassen, damit auch bei unterschiedlichen Größenverhältnissen immer eine sichere Befestigung des Holzstieles im Hammerauge gewährleistet ist.

Insgesamt ergibt sich durch die erfindungsgemäße Vorrichtung zur sicheren Befestigung eines Holzstieles im Hammerauge eines Hammerkopfes einerseits eine deutliche Verringerung der Kosten bei der Herstellung und auch der Montage des Hammerkopfes am Holzstiel, wobei gleichzeitig die Vorrichtung eine optimale Sicherung gegen das Lösen eines Hammerkopfes vom Holzstiel darstellt.

Bei einer vorteilhaften Ausführungsform der Vorrichtung ist der Holzstiel hammerkopfseitig zusätzlich mit einer Stielschutzhülse aus Stahl mit großer abgewinkelter Anlagefläche versehen.

Gegenüber der herkömmlichen Stielschutzhülse stellt diese Ausführungsform eine weitere Verbesserung der Befestigungssicherung dar. Durch die große abgewinkelte Anlagefläche ist eine zusätzliche Sicherung des Holzstiels im Bereich unterhalb des Hammerkopfes auch bei unsachgemäßer Handhabung des Hammers vorhanden, wodurch eine Beschädigung des Holzstieles im Bereich unterhalb des Hammerkopfes mit einer größeren Sicherheit vermieden werden kann.

Eine weitere Ausführungsform der Erfindung ist dadurch gekennzeichnet, dass der Kegelbereich der Keilschraube ca. ein Drittel der Höhe des Hammerkopfes beträgt. Versuche haben bei dieser Ausführungsform ergeben, dass bei dieser Ausgestaltung nicht nur eine sehr gute Befestigung der Keilschraube im Holzstiel, sondern auch eine gute Verdrängung des Holzmaterials zur sicheren Befestigung des Holzstiels im Hammerauge gewährleistet ist. Grundsätzlich ist der Kegelbereich der Keilschraube an die jeweilige Größe des Hammerauges angepasst, wobei das Volumen des konisch erweiterten Bereichs des Hammerauges etwas kleiner ist als das Volumen des Kegelbereichs, damit der Holzstiel im Hammerauge gut verkeilt wird.

Zum Zwecke der einfacheren Übertragung von Drehmomenten von einem Werkzeug auf den Kopf der Keilschraube, kann diese mit einem Sechskant- oder einem Torxantrieb gemäß einer weiteren Ausführungsform auf vorteilhafte Weise versehen sein.

Die Erfindung betrifft des Weiteren eine Keilschraube zur Befestigung eines Holzstieles im Hammerauge eines Hammerkopfes.

Ausgehend von der in der Beschreibungseinleitung zuletzt genannten Standes der Technik besteht die Aufgabe der Erfindung nunmehr darin, eine Schraube zur Befestigung eines Holzstieles im Hammerauge eines Hammerkopfes zu schaffen, welche einerseits eine sichere Befestigung im Holzstiel garantiert und andererseits sehr einfach und schnell im Holzstiel zu befestigen ist.

Der wesentliche Vorteil der erfindungsgemäßen Vorrichtung besteht darin, dass der Einschraubwiderstand aufgrund der Trennung von Kegelbereich und Holzschraubgewindebereich deutlich verringert ist. Darüber hinaus ist die erfindungsgemäße Keilschraube sehr einfach durch Veränderung des Kegelbereiches auf unterschiedlich große Hammeraugen anpassbar.

Bei einer vorteilhaften Ausführungsform dieser Erfindung beträgt der Kegelwinkel des Kegelbereichs der Keilschraube in Abhängigkeit von der Größe des Hammerauges zwischen 20 und 32°.

Weitere Vorteile der vorgenannten Erfindung ergeben sich aus der nachfolgenden Beschreibung der Ausführungsbeispiele. Es zeigen:
Fig. 1: eine Ansichtsdarstellung einer Keilschraube,
Fig. 2: eine Skizze eines Holzstiels,
Fig. 3: eine Vorderansicht eines Hammerkopfes,
Fig. 4: eine Draufsicht auf einen Hammerkopf,
Fig. 5 und 6: Schnittdarstellungen einer Stielschutzhülse,
Fig. 7: Darstellungen eines Spannstiftes,
Fig. 8: eine skizzenhafte Teilschnittdarstellung eines montierten Hammers,
Fig. 9: eine Vorderansicht des montierten Hammers gemäß Fig. 8,
Fig. 10: eine skizzenhafte Teilschnittdarstellung eines montierten Hammers ohne Stielschutzhülse,
Fig. 11: eine längsschnittartige Darstellung eines Hammerkopfes, und
Fig. 12: eine Querschnittsdarstellung des Hammerkopfes gemäß Fig. 11.

In den Zeichnungen ist eine Keilschraube insgesamt mit der Bezugsziffer 2 gekennzeichnet.

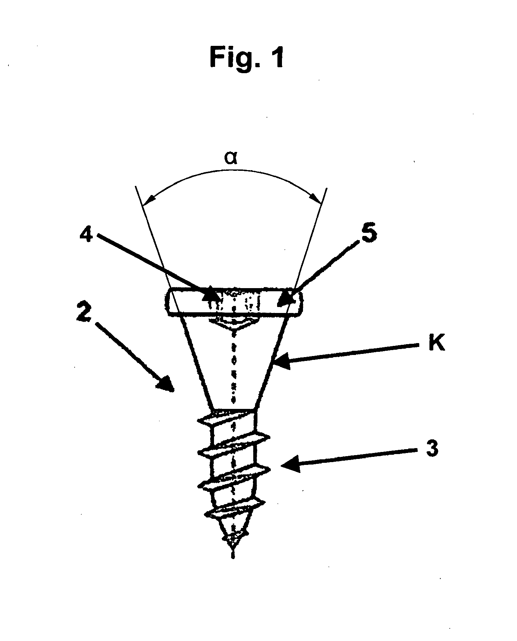

Wie aus Fig. 1 ersichtlich, weist die Keilschraube 2 einen Scheibenkopf 5 auf, der mit einem sogenannten Antrieb 4 (Einsenkung mit Schlüsselflächen) versehen ist. Die Keilschraube 2 gliedert sich in einen Holzschraubgewindebereich 3 und einen Kegelbereich K, der zwischen Holzschraubgewindebereich 3 und Scheibenkopf 5 angeordnet ist.

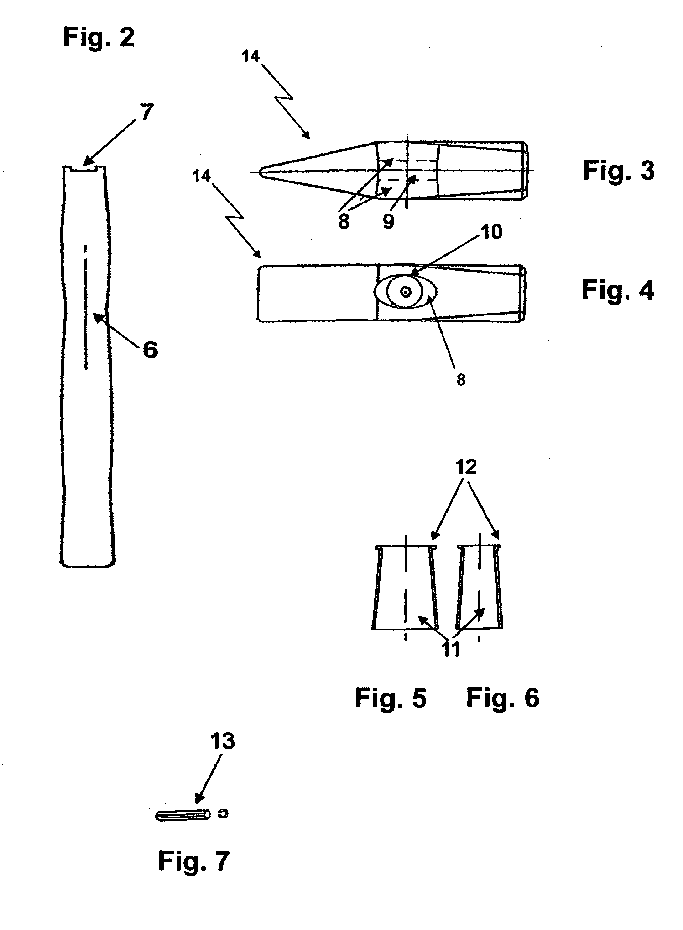

In der Fig. 2 ist skizzenhaft ein Holzstiel 6 dargestellt, der an seinem hammerkopfseitigen Ende eine Aussparung 7 zur Aufnahme des Scheibenkopfes 5 aufweist.

Die Fig. 3 und 4 zeigen die Vorderansicht bzw. die Draufsicht auf den Hammerkopf 14. Aus der Vorderansicht wird deutlich, dass das Hammerauge 8 bzw. 9 gemäß DIN1195 einen konischen Teil 8 und einen zylindrischen Teil 9 aufweist. An der Fig. 4 erkennt man, dass die Erstreckung des Hammerauges 8 in Längsrichtung des Hammerkopfes 14 wesentlich größer ist als in Querrichtung. Im Ergebnis führt dies dazu, dass der Durchmesser der Keilschraube 2 mit Scheibenkopf 5 so groß ist, dass er den zylindrischen Teil 9 des Hammerauges (s. Fig. 3) nicht passieren kann.

In den Fig. 5 und 6 sind in unterschiedlichen Richtungen Schnitte durch eine Stielschutzhülse 11 aus Stahl dargestellt. Auch hier erkennt man die an die Form des Holzstieles 6 angepasste Form der Stielschutzhülse 11. Wichtig ist in diesem Zusammenhang, dass die Stielschutzhülse 11 hammerkopfseitig abgewinkelte Anlagenflächen 12 aufweist, die dem besonderen Schutz des Holzstieles 6 auch bei unsachgemäßer Behandlung oder Einsatz des Werkzeuges dient.

Die Fig. 7 zeigt lediglich einen Spannstift 13, der unmittelbar neben der Stielschutzhülse 11 in den Holzstiel 6 eingetrieben wird, und mit dem die Stielschutzhülse 11 eine ebene Fläche ausbildet. Darüber hinaus garantiert der Spannstift eine dauerhafte, feste Anlage der Stielschutzhülse 11 am Hammerkopf 14 und erhöht die Biegefestigkeit des Holzstiels 6 enorm..

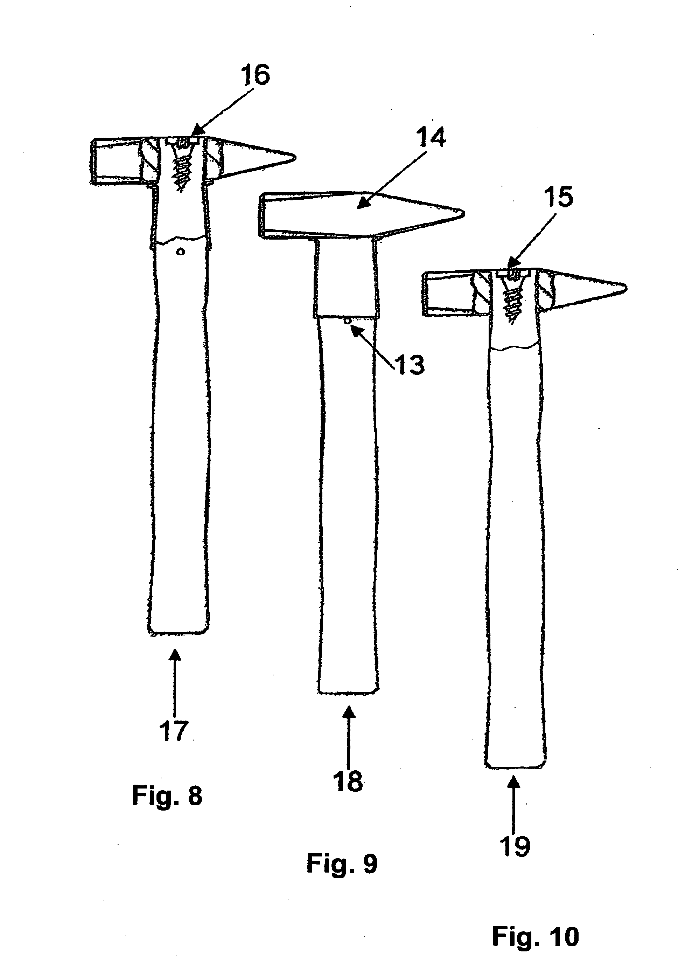

Des Weiteren ist in der Fig. 8 ein Hammerkopf 14 einschließlich Holzstiel 6 und einer Stielschutzhülse 11 abgebildet. Aus der Teilschnittdarstellung des Hammerkopfes 14 erkennt man darüber hinaus, dass dieser mit dem Holzstiel 6 mittels einer Keilschraube 2 einschließlich Scheibenkopf 5 klemmbefestigt ist. Durch die Bezugsziffer 16 ist gekennzeichnet, dass der Scheibenkopf 5 nach Befestigung der Keilschraube 2 vollständig in die Kontur des Hammerkopfes 14 eintaucht, so dass dort eine ebene Fläche entsteht.

In der Fig. 9 ist lediglich der in Fig. 8 dargestellte Hammer in vollständiger Seitenansicht zu erkennen, wobei die Stielschutzhülse 11 mittels eines Spannstiftes 13 in ihrer Position gesichert ist.

Die Fig. 10 zeigt eine der Fig. 8 ähnelnde Darstellung, wobei lediglich der Unterschied besteht, dass diese Anordnung aus Hammerkopf 14 und Holzstiel 6 keine Stielschutzhülse 11 aufweist.

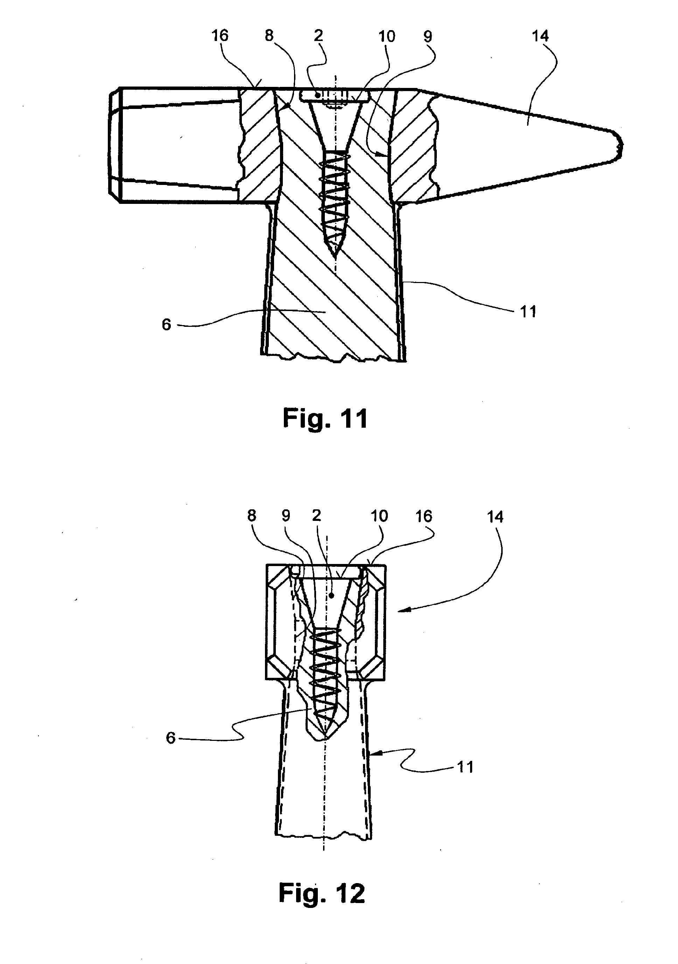

Letztlich sind in den Fig. 11 und 12 noch einmal Teilschnittdarstellungen des Hammerkopfes 14 (Längsschnitt und Querschnitt) mit eingesetztem Holzstiel 6 dargestellt. Einerseits erkennt man sehr gut, dass das Hammerauge aus einem konischen Teil 8 und einem zylindrischen Teil 9 besteht. Auch ist insbesondere in der Fig. 12 zu erkennen, dass der zylindrische Teil 9 eine kleinere Breite aufweist als der Scheibenkopf 5, so dass die Keilschraube 2 keinesfalls durch das Hammerauge 8/9 insgesamt hindurchgezogen werden kann.

Wesentlich an diesen Darstellungen ist ebenfalls, dass die der Befestigung des Holzstieles 6 im Hammerkopf 14 dienende Keilschraube 2 vollständig in die Kontur des Hammerkopfes 14 eintaucht und dass der Kegelbereich K einen hervorragenden Presssitz des Holzstieles 6 im Hammerauge 8/9 dadurch garantiert, dass durch Holzverdrängung zum Rand des Hammerauges hin eine sichere Befestigung erfolgt.

Letztlich zeigen die beiden Darstellungen der Fig. 11 und 12, dass in erster Linie durch die Keilschraube 2, aber zusätzlich auch durch die Stielschutzhülse 11 eine vollständige Sicherung des Hammerkopfes 14 am Holzstiel 6 vorhanden ist. Im Ergebnis ist der Hammerkopf 14 quasi zwischen dem Scheibenkopf 5 und den umlaufenden, abgewinkelten Anlageflächen 12 unverlierbar eingespannt.

Nachfolgend werden die ursprünglichen Unterlagen der Prioritätsanmeldung DE 20 2012 001 634.2 beigefügt, die damit in vollem Umfang Teil dieser Anmeldung darstellen.

### Bezugszeichenliste:

- 2: Keilschraube mit Scheibenkopf
- 3: Holzschraubgewindebereich
- 4: Antrieb
- 5: Scheibenkopf
- 6: Holzstiel
- 7: Aussparung zur Aufnahme des Scheibenkopfes (5)
- 8: Hammerauge, konischer Teil
- 9: Hammerauge, zylindrischer Teil
- 10: Anlage der Keilschraube
- 11: Stielschutzhülse aus Stahl
- 12: Abgewinkelte Anlagefläche
- 13: Spannstift
- 14: Hammerkopf
- 15: Stielbefestigung durch Keilschraube
- 16: Ebene Fläche
- 17: Hammerausschnitt mit Holzstiel, Keilschraube, Stielschutzhülse und Spannstift
- 18: Hammer komplett mit Holzstiel, Keilschraube, Stielschutzhülse und Spannstift
- 19: Hammer mit Holzstiel und Keilschraube
- K: Kegelbereich
- α: Kegelwinkel

### Stand der Technik.

Die Erfindung bezieht sich auf Keilschrauben zum Befestigen von Holzstielen für Hämmer. Die Hammerköpfe, die mit den Holzstielen bestückt werden haben doppelt konische Hammeraugen. Das Einstielende der Holzstiele entspricht der ovalen Form und der zylindrischen Abmessung des Hammerauges. Jede Hammergröße bzw. jedes Gewicht des Hammerkopfes hat ein besonders Maß des Hammerauges, das in der DIN-Norm "DIN 1195 für Hammeraugen" festgelegt ist. Der Holzstiel wird durch den engsten und zylindrischen Teil des Hammerauges bis zum Ende des Hammerkopfes eingetrieben. Der konische Teil des Hammerauges ist entsprechend des vorgeschriebenen Winkels von 4° bis 8° größer, damit sich der Holzstiel durch Eintreiben eines Keiles spreizt und befestigt. Das Volumen des Keiles sollte etwas größer sein als das Volumen, um das der konische Teil des Hammerauges größer ist als der zylindrische Teil. Die bisher bekannten Keile sind Flachkeile aus Holz, Stahl oder Guss und Ringkeile. Flachkeile aus Holz brechen beim Entreiben leicht ab, besonders wenn sie in sehr harte Holzstiele (z.B. Hickory) eingetrieben werden. Wenn die Holzkeile abbrechen wird das Volumen der Holzkeile wesentlich verkleinert und die Befestigung der Stiele wird erheblich vermindert. Außerdem können die Holzkeile selten so weit in den Holzstiel eingetrieben werden, dass sie glatt mit dem Hammerkopf abschließen. Die über dem Hammerkopf hervorstehenden Keile müssen dann mit einem speziellen Messer oder einem Stechbeitel entfernt werden. Keile aus Stahl oder Guss haben den Nachteil, dass sie sich lösen, wenn die eingestlelten Hämmer zu trocken gelagert werden und die Holzstiele schrumpfen. Ringkeile sind außen konisch und haben eine zylindrische Bohrung. Der Konus der Ringkeile ist so gewählt, dass am Einschlagende der Ringkeile eine scharfe Schneide entsteht, damit sie sich leicht in den Holzstiel eintreiben lassen. Das Volumen des Ringkeiles ist meistens kleiner als das Volumen, um das der konische Teil des Hammerauges größer ist als der zylindrische Teil. Die Verwendung der Ringkelle wird dennoch bevorzugt, weil sie sich für das automatische, maschinelle Einstielen bestens eignen. Der Nachteil aller hier beschriebenen Keile ist, dass sie leicht durch die zylindrischen Teil des Hammerauges austreten können. Zahlreiche Unfälle mit Hämmern kommen immer wieder vor, weil die Hammerköpfe unkontrolliert von ausgetrockneten Holzstielen wegfliegen. Es sind Stielbefestigungen bekannt, bei denen die Holzstiele durch Platten und Schrauben oder nur durch Schrauben gesichert werden, die über dem Hammerkopf hervorstehen. Die Holzstiele werden zum Teil auch mit Stielschutzhülsen aus Kunststoff oder aus Stahl bestückt, um sie vor Fehlschlägen zu schützen. Stielschutzhülsen aus Kunststoff sind nicht sehr widerstandsfähig. Gehärtete Stielschutzhülsen aus Stahl schützen den Holzstiel sehr gut.

### Aufgabe

Der Erfindung liegt die Aufgabe zugrunde, einen Keil herzustellen, dessen Volumen größer ist als das Volumen, um das der konische Teil des Hammerauges größer ist als der zylindrische Teil und der eine dauerhafte Verbindung zwischen Holzstiel und Hammerkopf schafft, die sich niemals ungewollt lösen kann, auch dann nicht, wenn der Holzstiel extrem ausgetrocknet ist. Der Keil soll so konstruiert werden, dass er den zylindrischen Teil des Hammerauges nicht passieren kann. Er soll nach dem Eindringen in den Holzstiel eine ebene Fläche mit dem Hammerkopf bilden. Gerade Handwerker, die viel mit Hämmern arbeiten, stellen die Hämmer am liebsten senkrecht, auf dem Kopf stehend, ab, damit sie immer griffbereit sind. Am Hammerkopf hervorstehende Platten oder Schauben machen das senkrechte Abstellen von Hämmern fast unmöglich, weil sie durch die sich ergebende unebene Fläche umfallen. Außerdem können die am Hammerkopf hervorstehenden Teile bei unvermeidbaren Fehlschlägen getroffen und abgetrennt werden und die gewünschte absolut sichere Verbindung von Holzstiel und Hammerkopf ist nicht mehr gewährleistet. Der Keil soll leicht zu montieren und kostengünstig sein. Der Holzstiel soll mit einer gehärteten Stielschutzhülse aus Stahl versehen sein, um ihn bei Fehlschlagen zu schützen und ein Abbrechen der Stiele direkt unter dem Hammerkopf zu verhindern. Die Stielschutzhülse aus Stahl soll eine möglichst große Anlagefläche am Hammerkopf bieten, um eine größere Stabilität und eine erhöhte Biegefestigkeit des Holzstieles zu erzielen.

### Lösung

Zur Lösung dieser Aufgabe wird erfindungsgemäß vorgeschlagen, dass die Keilschraube (1) gefertigt wird, deren Kopf als Keil ausgebildet ist, der so lang ist, dass er ca. 1/3 der Höhe des Hammerkopfes (14) entspricht. Unterhalb des Keilabschnittes hat die Keilschraube ein Holzschraubgewinde (3). Die Gesamtlänge der Schraube entspricht ungefähr der Höhe des Hammerkopfes. Der größte Durchmesser des konischen Keilschraubenkopfes ist so groß, dass er nach dem Einschrauben in den Holzstiel (6) am oberen Ende des konischen Hammerauges (10) eng anliegt. Für jede Hammergröße bzw. für jedes Hammerauge wird eine entsprechende Keilschraube gefertigt. Für größere Hämmer bzw. für größere Hammeraugen wird die Keilschraube mit Scheibenkopf (2) gefertigt, deren Kopf als Scheibenkopf (5) ausgebildet ist, darunter folgen der Keilabschnitt und das Holzschraubgewinde. Der Durchmesser der Keilschraube und der Keilschraube mit Scheibenkopf ist so groß, dass er den zylindrischen Teil des Hammerauges (9) nicht passieren kann. Die Keilschraube und die Keilschraube mit Scheibenkopf sind mit einem Sechskantantrieb oder mit einem Torxantrieb (4) ausgestattet. Die Ausführung der Keilschraube mit Scheibenkopf ist erforderlich, weil der Keilabschnitt bei größeren Hammerköpfen ab 500g Gewicht zu groß sein würde. Das Volumen zum Spreizen des Holzstieles, dass sich im konischen Hammerauge (8) ergibt, würde um das Mehrfache übertroffen und das Einschrauben der Keilschraube unmöglich machen. Bei Verwendung der Keilschraube mit Scheibenkopf wird der Holzstiel mit der Aussparung zur Aufnahme des Scheibenkopfes (7) versehen, damit der Holzstiel nach dem Einschrauben der Keilschraube mit Scheibenkopf in den Holzstiel mit dem Hammerkopf eine ganz glatte und ebene Fläche (16) bildet.

Die Form der Stielchutzhülse aus Stahl (11) wird dem Maß des Holzstieles entsprechend konisch gefertigt Am kleineren Ende wird die Stleischutzhülse aus Stahl abgewinkelt, damit eine große abgewinkelte Anlagefläche (12) entsteht, die am Hammerkopf anliegt Die Hammerköpfe werden nach DIN Normen gefertigt (z.B. "DIN 1041 für Schlosserhammer" und "DIN ISO 2768-1 Allgemeintoleranzen") und können je nach Gewicht in Höhe und Breite größer oder kleiner sein. Der Holzstiel wird so mit der Stielschulzhülse aus Stahl bestückt, dass er nur so weit aus der Stielschutzhülse aus Stahl hervorragt wie das kleinste Maß der entsprechenden Größe des Hammerkopfes sein kann. Der Holzstiel mit der Stleischutzhülse aus Stahl wird ganz in das Hammerauge eingetrieben bis er mit Hammerkopf eine ebene Fläche bildet. Dabei wird die Stielschutzhülse aus Stahl zwangsläufig so weit auf den Holzstiel gepresst, dass sie ganz eng am Hammerkopf anliegt. Dann wird der Holzstiel durch Einschrauben der Keilschraube im Hammerkopf befestigt (15). Die Stielschufzhülse wird durch Eintreiben des Spannstiftes (13) in den Holzstiel, direkt hinter dem Ende der Stielschutzhülse, zusätzlich gesichert. Dadurch wird die Biegefestigkeit des Holzstieles nochmals erhöht weil sich die Hülse nicht nach hinten verschieben kann. Die Abbildung (17) zeigt den Querschnitt des kompletten Hammers mit Holzstiel, Keilschraube und Stielschutzhülse. Die Abbildung (18) zeigt den kompletten Hammer mit Hofzstiel und Stleischutzhülse. Die Abbildung (19) zeigt den Querschnitt des kompletten Hammers mit Holzstiel und Keilschraube.

Durch diese Erfindung wird die Lösung der Aufgabe voll erfüllt. Die Keilschraube ist einfach in den Holzstiel einzuschrauben, der Kopf der Keilschraube bildet mit dem Hammerkopf eine ebene Fläche und ist so groß, dass er den zylindrischen Teil des Hammerauges nicht passieren kann und der Holzstiel immer mit dem Hammerkopf verbunden bleibt Durch Ausschrauben der Keilschraube kann der Holzstiel ganz einfach vom Hammerkopf gelöst werden. Der Einsatz der Keilschraube ist sehr wirtschaftlich, weil der Keil und die Schraube eine Einheit bildet und eine Automatisierung der Befestigung des Holzstieles wesentlich erleichtert. Die Stielschutzhülse aus Stahl wird durch Eintreiben des Spannstiftes gesichert und schützt den Holzstiel bei Fehlschlägen und erhöht die Biegefestigkeit des Holzstieles durch die große abgewinkelte Ablagefläche. Der Holzstiel mit Stielschutzhülse aus Stahl und Keilschraube wird auch als Ersatzteil angeboten.

## Patentansprüche

1. Vorrichtung zur sicheren Befestigung eines Holzstieles im Hammerauge eines Hammerkopfes mittels einer Schraube einschließlich Schraubenkopf und einem Holzschraubgewinde sowie einem Mittel zur Verdrängung des Holzmaterials,
**dadurch gekennzeichnet,**
**dass** die einstückige Schraube (2) zur Befestigung des Holzstieles (6) einen als Scheibenkopf (5) ausgebildeten Schraubenkopf aufweist, dass der Durchmesser des Scheibenkopfes (5) größer ist als der Durchmesser des zylindrischen Teils (9) des Hammerauges gemäß DIN1195 und dass der Scheibenkopf (5) als Keilersatz einen sich daran anschließenden, eine Verdrängung von Holzmaterial hervorrufenden Kegelbereich (K) und einen separaten, zylindrischen Holzschraubgewindebereich (3) aufweist.

2. Vorrichtung nach Anspruch 1, **dadurch gekennzeichnet, dass** der Holzstiel (6) hammerkopfseitig zusätzlich mit einer Stielschutzhülse (11) aus Stahl mit großer abgewinkelter Anlagefläche (12) versehen ist.

3. Vorrichtung nach Anspruch 1 oder 2, **dadurch gekennzeichnet, dass** der Kegelbereich (K) der Keilschraube (2) ca. 1/3 der Höhe des Hammerkopfes (14) beträgt.

4. Vorrichtung nach einem der vorangehenden Ansprüche, dass die Keilschraube (2) mit einem Sechskant- oder einem Torxantrieb (4) versehen ist

5. Vorrichtung nach einem der vorangehenden Ansprüche, **dadurch gekennzeichnet, dass** der Kegelwinkel (α) des Kegelbereichs (K) der Keilschraube (2) (in Abhängigkeit von der Größe des Hammerauges (8/9) zwischen 20 und 32° beträgt.

## Claims

1. Device for securely fastening a wooden handle in the eye of a hammer head by means of a screw including a screw head and a wood-screw thread and also a means for displacing the wooden material,
**characterised in that**
the one-piece screw (2) for fastening the wooden handle (6) has a screw head designed as a disc-type head (5), that the diameter of said disc-type head (5) is larger than the diameter of the cylindrical part (9) of the eye of the hammer according to DIN1195, and that the disc-type head (5) has, as a substitute for a wedge, a conical region (K) which adjoins it and brings about a displacement of wooden material, and a separate, cylindrical threaded region (3) of the wood screw.

2. Device according to Claim 1, **characterised in that** the wooden handle (6) is additionally provided, at the hammer-head end, with a handle-protecting sleeve (11) made of steel with a large, angled bearing surface (12).

3. Device according to Claim 1 or 2, **characterised in that** the conical region (K) of the wedging screw (2) is about 1/3 of the height of the hammer head (14).

4. Device according to one of the preceding claims, **characterised in that** the wedging screw (2) is provided with a hexagon drive or a Torx drive (4).

5. Device according to one of the preceding claims, **characterised in that** the cone angle (α) of the conical region (K) of the wedging screw (2) is between 20 and 32° (depending upon the size of the eye (8/9) of the hammer).

## Revendications

1. Dispositif de fixation sécurisée d'un manche en bois dans l'emmanchure d'une tête de marteau au moyen d'une vis, y compris tête de vis et un filet de vis à bois, ainsi qu'un moyen pour déplacer le matériau en bois, **caractérisé en ce que** la vis (2) monobloc présente pour la fixation du manche en bois (6) une tête de vis réalisée en tant que tête étagée (5), **en ce que** le diamètre de la vis étagée (5) est supérieur au diamètre de la partie cylindrique (9) de l'emmanchure, selon DIN 1195 et **en ce que** la tête étagée (5) présente, en tant que remplacement de coin, une zone conique (K) provoquant un déplacement du matériau en bois, s'y raccordant et une zone de filet de vis à bois (3) cylindrique et séparée.

2. Dispositif selon la revendication 1, **caractérisé en ce que** le manche en bois (6) est muni, en plus, côté tête de marteau, d'une douille de protection du manche (11) en acier avec une grande face d'appui (12) coudée.

3. Dispositif selon la revendication 1 ou 2, **caractérisé en ce que** la zone conique (K) de la vis à coin (2) est d'environ 1/3 de la hauteur de la tête de marteau (14).

4. Dispositif selon l'une des précédentes revendications, **caractérisé en ce que** la vis à coin (2) est munie d'une empreinte Torx ou à six pans creux (4).

5. Dispositif selon l'une des précédentes revendications, **caractérisé en ce que** l'angle conique (α) de la zone conique (K) de la vis à coin (2) est (en fonction de la taille de l'emmanchure (8/9)) entre 20 et 32°.
